(19) Europäisches Patentamt
European Patent Office
Office européen des brevets

(11) **EP 3 952 514 A1**

(12) **EUROPEAN PATENT APPLICATION**
published in accordance with Art. 153(4) EPC

(43) Date of publication:
**09.02.2022 Bulletin 2022/06**

(51) International Patent Classification (IPC):
**H04W 72/04** (2009.01)    **H04W 16/14** (2009.01)
**H04W 28/06** (2009.01)

(21) Application number: **19923696.9**

(52) Cooperative Patent Classification (CPC):
**H04W 16/14; H04W 28/06; H04W 72/04**

(22) Date of filing: **01.04.2019**

(86) International application number:
**PCT/JP2019/014448**

(87) International publication number:
**WO 2020/202429 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **TAKEDA, Kazuki**
**Tokyo 100-6150 (JP)**
• **TAKAHASHI, Yuki**
**Tokyo 100-6150 (JP)**
• **NAGATA, Satoshi**
**Tokyo 100-6150 (JP)**
• **WANG, Lihui**
**Beijing 100190 (CN)**
• **ZHANG, Xiaohong**
**Beijing 100190 (CN)**
• **HOU, Xiaolin**
**Beijing 100190 (CN)**

(74) Representative: **Hoffmann Eitle**
**Patent- und Rechtsanwälte PartmbB**
**Arabellastraße 30**
**81925 München (DE)**

(54) **USER EQUIPMENT AND WIRELESS COMMUNICATION METHOD**

(57) A user terminal according to an aspect of the present disclosure includes a receiving section that receives downlink control information including a given value of a given field, and a control section that controls, on the basis of one value selected from a set of one or more candidate values associated with the given value, transmission of an uplink shared channel or reception of a downlink shared channel that are scheduled by the downlink control information. Therefore, it is possible to flexibly control, on the basis of a value of a given field in DCI, transmission of an uplink signal or reception of a downlink signal.

| TDRA FIELD VALUE m | CANDIDATE VALUE #1 | CANDIDATE VALUE #2 | CANDIDATE VALUE #3 | CANDIDATE VALUE #4 |
|---|---|---|---|---|
| 00 | S=0,L=8 | S=2,L=8 | S=4,L=8 | S=6,L=8 |
| 01 | S=0,L=4 | S=4,L=4 | S=8,L=4 | |
| 10 | S=0,L=14 | | | |
| 11 | S=0,L=7 | S=7,L=7 | | |

FIG. 1

EP 3 952 514 A1

**Description**

Technical Field

The present disclosure relates to a user terminal and a radio communication method in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In existing LTE systems (e.g., Rel. 8 to Rel. 14), a user terminal (User Equipment (UE)) controls transmission of an uplink shared channel (e.g., a Physical Uplink Shared Channel (PUSCH)) and reception of a downlink shared channel (e.g., a Physical Downlink Shared Channel (PDSCH)) on the basis of downlink control information (DCI).

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (hereinafter also referred to as NR), supporting a plurality of starting positions (also referred to as starting symbols and so on) in a time domain for an uplink signal (e.g., a PUSCH) or a downlink signal (e.g., a PDSCH) scheduled by a single DCI is under study.

However, a value of a given field (e.g., a time domain resource allocation (Time Domain Resource Assignment or allocation (TDRA)) field) in DCI is assumed to uniquely identify a starting position of an uplink signal or a downlink signal allocated to a UE, and thus it may not be possible to support the plurality of the starting positions.

As described above, when the value of the given field in DCI uniquely identifies information used for transmission of the uplink signal or reception of the downlink signal in the UE, it may not be possible for the UE to flexibly control the transmission of the uplink signal or the reception of the downlink signal, for example, may not be possible to support the plurality of the starting positions and the like,

Thus, an object of the present disclosure is to provide a user terminal and a radio communication method that can flexibly control, on the basis of a value of a given field in DCI, transmission of an uplink signal or reception of a downlink signal.

Solution to Problem

A user terminal according to an aspect of the present disclosure includes a receiving section that receives downlink control information including a given value of a given field, and a control section that controls, on the basis of one value selected from a set of one or more candidate values associated with the given value, transmission of an uplink shared channel or reception of a downlink shared channel that are scheduled by the downlink control information.

Advantageous Effects of Invention

According to an aspect of the present disclosure, it is possible to flexibly control, on the basis of a value of a given field in DCI, transmission of an uplink signal or reception of a downlink signal.

Brief Description of Drawings

FIG. 1 is a diagram to show an example of a candidate value set associated with each value m of a TDRA field according to a first aspect;
FIGS. 2A to 2D are diagrams to show examples of a time domain resource for a PUSCH indicated by each candidate value set according to the first aspect;
FIG. 3 is a diagram to show an example of a candidate value set associated with each value m of an FDRA field according to the first aspect;
FIG. 4 is a diagram to show an example of a schematic structure of a radio communication system according to one embodiment;
FIG. 5 is a diagram to show an example of a structure of a base station according to one embodiment;
FIG. 6 is a diagram to show an example of a structure of a user terminal according to one embodiment; and
FIG. 7 is a diagram to show an example of a hardware structure of the base station and the user terminal according to one embodiment.

Description of Embodiments

(NR-U)

For future radio communication systems (e.g., NR), utilizing not only a licensed band but also an unlicensed band (e.g., the 2.4 GHz band or the 5 GHz band) is under study. An NR system that utilizes the unlicensed band may be referred to as NR-Unlicensed (U), NR License-Assisted Access (LAA), an NR-U system, and so on.
In the unlicensed band, a plurality of systems, such as not only the NR-U system but also another LAA system, Wi-Fi (registered trademark) system, and the like, is assumed to coexist, and thus at least one of interference control and contention control is performed between the plurality of the systems.
A transmission node in the NR-U system performs listening for checking the presence or absence of transmission by another node (e.g., a base station, a user terminal, a Wi-Fi apparatus, and the like) before transmission of a signal (e.g., a data signal) in the unlicensed band. Note that the listening may be referred to as Listen Before Talk (LBT), Clear Channel Assessment (CCA), carrier sense, channel access procedure, or the like.
The transmission node in a downlink (DL) may be, for example, a base station (e.g., gNodeB (gNB), a transmission/reception point (TRP), a network (NW)), and the transmission node in an uplink (UL) may be, for example, a user terminal (e.g., User Equipment (UE)). A reception node in the DL that receives a signal from the transmission node may be, for example, a UE, and the reception node in the UL may be, for example, a base station.
The transmission node starts transmission after a given period (e.g., a period immediately after or a backoff period) from detection of the absence (idle) of transmission by another apparatus in listening, and does not perform signal transmission when the presence (busy, LBT-busy) of transmission by another apparatus is detected in listening.
On the other hand, when the absence (idle, LBT-idle) of transmission by another node is detected in listening, the transmission node obtains a transmission opportunity (TxOP), (channel occupancy), and starts signal transmission. The transmission opportunity time is referred to as Channel Occupancy Time (COT).
The COT is a total length of time for all transmissions in a transmission opportunity and gaps during a given time, and may be equal to or less than a maximum COT (MCOT). The MCOT may be determined on the basis of channel access priority class. The channel access priority class may be associated with a contention window size.
At the COT obtained by the base station or the UE, transmission or reception of one or more signals may be performed. For example, within one COT, at least one of downlink control information (DCI) for scheduling a downlink shared channel (Physical Downlink Shared Channel (PDSCH)) or an uplink shared channel (Physical Uplink Shared Channel (PUSCH)), a PDSCH, a PUSCH, and an uplink control channel (Physical Uplink Control Channel (PUCCH)) may be transmitted or received. Within one COT, a signal between the base station and one or more UEs may be transmitted or received.
At the start of COT triggered by the base station, the base station may transmit a signal (notification signal of the start of COT) for notifying the start of the COT. The notification signal of the start of COT may be, for example, a downlink shared channel (Physical Downlink Shared Channel (PDSCH)) that is UE-specific or common to a group including one or more UEs (UE group) or a demodulation reference signal (DMRS) for the PDSCH. The UE may acknowledge COT on the basis of the above-described notification signal of the start of COT.
The NR-U system as described above may be operated by carrier aggregation (CA) on a component carrier (CC) in an unlicensed band (unlicensed CC) and a CC in a licensed band (licensed CC) or dual connectivity (DC), or may be operated by a stand alone (SA) on an unlicensed CC.

Note that the unlicensed CC may be interchangeably interpreted as an unlicensed band, an unlicensed spectrum, an LAA SCell, an LAA cell, a primary cell (PCell, Primary Secondary Cell: PSCell, Special Cell: SpCell), a secondary cell (SCell), a frequency to which channel sensing is applied, a frequency intended for NR-U, and the like.

The licensed CC may be interchangeably interpreted as a licensed band, a licensed spectrum, a PCell, a PSCell, an SpCell, an SCell, a frequency intended for non NR-U, Rel. 15, NR, a frequency to which channel sensing is not applied, a frequency intended for NR, and the like.

Incidentally, for NR-U systems as described above, supporting a plurality of starting positions (starting symbols) in one or a plurality of slots for a PUSCH scheduled by a single DCI is under study.

However, a value of a given field (e.g., a time domain resource allocation (Time Domain Resource Assignment or allocation (TDRA)) field) in DCI is assumed to uniquely identify a starting position of a time domain resource (e.g., one or more symbols) allocated to a PUSCH, and thus it may not be possible to support the plurality of the starting positions.

As described above, when the value of the given field in DCI uniquely identifies information used for transmission of an uplink signal (e.g., a PUSCH) in the UE, it may not be possible for the UE to flexibly control the transmission of the uplink signal, for example, may not be possible to support the plurality of the starting positions and the like. A similar challenge can also occur in reception of a downlink signal (e.g., a PDSCH).

Thus, the present disclosure came up with the idea of allowing, by associating a set (candidate value set) of one or more candidate values with a value of a given field in DCI, the UE to select information used for transmission of an uplink signal (e.g., a PUSCH) or reception of a downlink signal (e.g., a PDSCH) from the candidate value set. Therefore, the UE can flexibly control the transmission of the uplink signal or reception of the downlink signal as compared to a case where the given field value in the DCI uniquely identifies the information.

Note that the above-described candidate value set associated with a given value of a given field in DCI may be configured for the UE by higher layer signaling (a first case), or may be derived on the basis of the above-described given value (a second case).

Embodiments according to the present disclosure will be described in detail below with reference to the drawings. Note that although it is assumed that the present disclosure is employed in transmission of an uplink signal or reception of a downlink signal on an unlicensed CC, the present disclosure is not limited to this. The present disclosure can be employed in transmission of an uplink signal or reception of a downlink signal on a licensed CC.

In the present disclosure, a frequency, a band, spectrum, a carrier, a component carrier (CC), and a cell may be interchangeably interpreted.

In the present disclosure, a value of a given field in DCI may be interpreted as a code point of the given field. One or more candidate values, one or more candidates, a set of candidates, one or more values, a set of values, and a set may also be interchangeably interpreted.

(First Aspect)

The first aspect describes a set (candidate value set) of one or more candidate values that is associated with a value m of a given field (e.g., a time domain resource allocation (Time Domain Resource Assignment or allocation (TDRA)) field) in DCI.

The candidate value set may include one or more candidate values for information (TDRA information) related to time domain resource allocation that is allocated to a PUSCH. The TDRA information may include, for example, at least one piece of information (also referred to as a parameter, an information element (IE), and so on) as follows:

- information (e.g., an index of a starting symbol S) that indicates a starting position of a PUSCH;
- information (e.g., the number of symbols) that indicates a length L of the PUSCH;
- information (e.g., Start and Length Indicator (SLIV)) that indicates a combination of the starting symbol S and the length L;
- information (offset information, K2 information) that indicates time offset K2 (also referred to as k2, $K_2$, and so on) between DCI and the PUSCH scheduled by the DCI; and
- information (mapping type information) that indicates a mapping type of the PUSCH.

The above-described candidate value set may include one or more candidate values for the above-described at least one IE. Note that the above-described candidate value set for each of the above-described IEs may be associated with a given value m of the TDRA field.

Although an example in which the candidate value set for the SLIV is associated with the given value m of the TDRA field will be described below, the present disclosure is not limited to this. By replacing the SLIV with another IE, the present disclosure can also be employed in a case where the candidate value set for another IE (e.g., the starting symbol S, the length L, or the K2 information) in the TDRA information is associated with the given value m.

A UE may determine, on the basis of one SLIV that is selected from the candidate value set associated with a TDRA field value in DCI, at least one of a starting position (starting symbol S) and a length L of a time domain resource allocated to the PUSCH.

The UE may select one SLIV from the above-described candidate value set on the basis of a given rule. The given rule may be based on, for example, at least one as follows:

- a timing at which COT is obtained by the UE;
- a timing at which COT is acknowledged by the UE through notification signal of the start of COT;
- a timing at which idle is detected by LBT; and
- a timing at which preparation for transmission of data form the UE is finished.

The candidate value set associated with each value m (m = 0 to M-1) of the TDRA field may be configured for the UE by a base station (a first case), or may be derived on the basis of each value m (a second case). Note that the candidate value set may be predetermined by a specification.

Here, M may denote the number of values (e.g., 0 to M-1), (or code points) that can be taken by a value m of the TDRA field. The number (size) of bits of the TDRA field may be expressed by Expression (1) below.

[Math. 1]

$$\lceil log_2(M) \rceil \qquad \text{(Expression 1)}$$

<First Case>

In the first case, the UE may receive the candidate value set associated with each value m of the TDRA field.

Specifically, the UE may receive configuration information (also referred to as a TDRA list, a list, and so on) including M entries (M pieces) of the candidate value sets by higher layer signaling (e.g., Radio Resource Control (RRC) signaling). The TDRA list may be, for example, an RRC information element (IE) "pusch-TimeDomainAllocationList" or "PUSCH-TimeDomainResourceAllocationList."

Here, the number M of entries in the TDRA list may be equal to the number of values m of the TDRA field in DCI (in other words, 2 to the power of X when the TDRA field is X bits).

Each value m of the TDRA field in DCI may be associated with a certain (given) entry (in other words, the candidate value set) in the above-described TDRA list. For example, when values m of the TDRA field are equal to 0 to M-1, the values m may be associated with an (m+1)-th entry (in other words, an (m+1)-th candidate value set) in the above-described TDRA list.

The UE monitors a given search space (search space set), and detects DCI (e.g., DCI format 0_0 or 0_1) used for scheduling of a PUSCH. The UE may control transmission of the PUSCH on the basis of the candidate value set that is associated with a given value m of the TDRA field in the DCI.

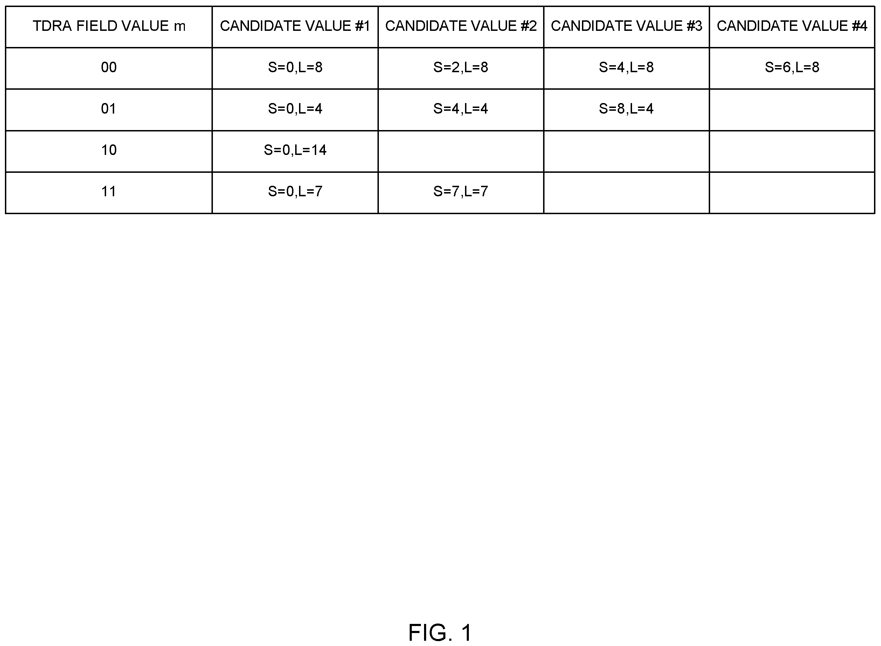

FIG. 1 is a diagram to show an example of the candidate value set that is associated with each value m of the TDRA field according to the first aspect. Although FIG. 1 shows an example in which the TDRA field is 2 bits, the present disclosure is not limited to this, and the TDRA field may be 3 or more bits.

As shown in FIG. 1, each value m of the TDRA field may be associated with a candidate set that includes a candidate value for one or more SLIVs. Each SLIV may indicate an index of a starting symbol S and a length (the number of symbols) L of a time domain resource (e.g., one or more symbols) allocated to a PUSCH.

As shown in FIG. 1, as between a plurality of values m of the TDRA field, the numbers of candidate values included in the candidate value set may be different from or equal to each other. For example, in FIG. 1, the candidate value sets that are associated with each of values "00," "01," "10," and "11" of the TDRA field include a different number (4, 3, 1, and 2 pieces) of candidate values, respectively.

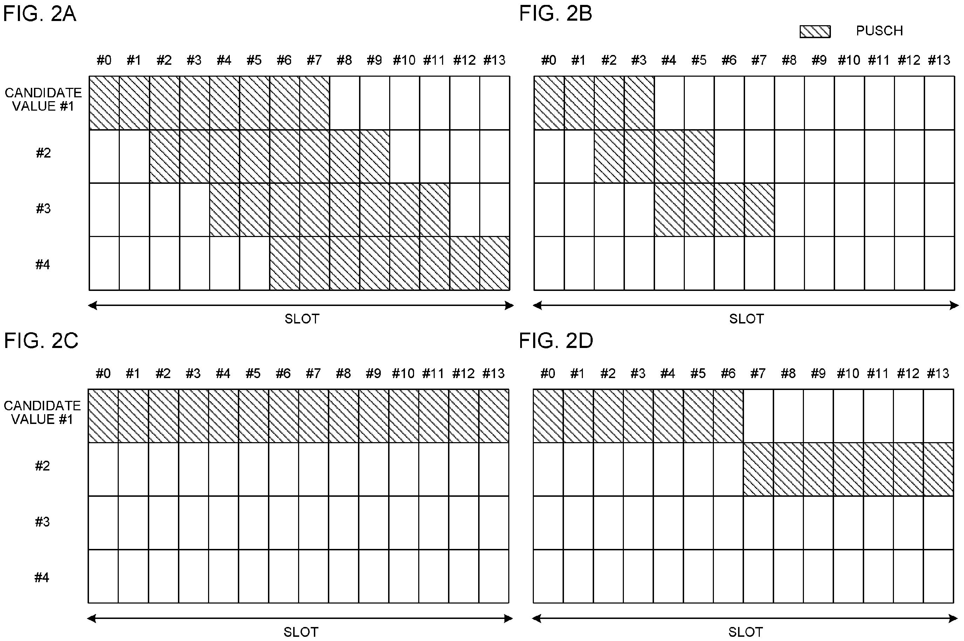

FIGS. 2A to 2D are diagrams to show examples of the time domain resource for the PUSCH indicated by each candidate value set according to the first aspect. FIG. 2A shows time domain resource allocation of the PUSCH corresponding to candidate values #1 to #4 in the candidate value set that is associated with the value "00" of the TDRA field in FIG. 1.

As shown in FIG. 2A, candidate value #1 that is associated with a value "00" of the TDRA field in FIG. 1 may indicate an index "0" of a starting symbol S and a length "8" of the PUSCH. Similarly, other SLIV candidate values #2, #3, and #4 that are associated with the value "00" of the TDRA field may indicate indices "2," "4," and "6" of the starting symbol and the length "8" of the PUSCH.

Similarly, FIGS. 2B, 2C, and 2D show the PUSCH corresponding to one or more SLIV candidate values that are associated with values "01," "10," and "11" of the TDRA field in FIG. 1, respectively.

As described in FIG. 1 and FIGS. 2A to 2D, when the candidate value set for the SLIV is associated with each value of the TDRA field, the UE may select one SLIV from the candidate value set associated with a given value m of the TDRA field in the DCI, and may control transmission of the PUSCH on the basis of the selected SLIV.

For example, when the UE detects (receives) the DCI including a value "00" of the TDRA field and obtains (acknowledges) COT at symbol #2 in FIG. 2A, the UE may select candidate value #3 indicating an index "4" of the starting symbol S that is the earliest after symbol #2 out of candidate values #1 to #4 associated with the value "00."

The UE may determine, on the basis of the selected SLIV candidate value #3, the time domain resource allocated to the PUSCH. For example, in FIG. 2A, when selecting SLIV candidate value #3 that is associated with a value "00" of the TDRA field, the UE may transmit the PUSCH that has a length of 8 symbols from symbol #4.

The base station may control a reception processing (e.g., at least one of reception, demodulation, and decoding) of the PUSCH by using each candidate value in the candidate value set that is associated with a given value m of the TDRA field in the DCI (in other words, the base station may detect the PUSCH in the candidate value set by using blind detection).

Note that when a UL skip is configured for the UE by a higher layer parameter (e.g., an RRC IE "skipUplink-TxDynamic"), and data to be transmitted does not exist, the UE may skip transmission in which the PUSCH scheduled by the DCI is used. This may be the same meaning as an association of an additional candidate value indicating no transmission with each value m of the TDRA field in the DCI (inclusion of an additional candidate value in the candidate value set).

As shown in FIG. 1 and FIGS. 2A to 2D, in a plurality of SLIVs (candidate values) in an identical candidate value set, it is only required that at least either starting symbols S or lengths L indicated by the plurality of the SLIVs are different from each other.

For example, in a plurality of SLIVs in an identical candidate value set, when starting symbols S indicated by the plurality of the SLIVs are different from each other and lengths L indicated by the plurality of the SLIVs are equal to each other, it is possible to equalize transport block sizes (TBSs) as between the plurality of the SLIVs. Therefore, even when the candidate value set is associated, in place of a single SLIV, with a TDRA field value m in DCI, it is possible to simplify control of the PUSCH transmission.

Note that equalizing lengths L between a plurality of SLIVs in an identical candidate value set can avoid having an impact on at least one of frequency domain resource allocation and a modulation and coding scheme (MCS).

On the other hand, when transmission bandwidths ($L_{CRBs}$) between a plurality of RIVs in an identical candidate value set are different from each other, the UE may determine the TBS on the basis of an RIV that indicates a specific transmission bandwidth (e.g., a minimum transmission bandwidth).

Alternatively, when transmission bandwidths ($L_{CRBs}$) between a plurality of RIVs in an identical candidate value set are different from each other, the UE may determine the TBS on the basis of a transmission bandwidth indicated by an RIV that is selected from the candidate value set in accordance with a given rule.

In the first case, all candidate values in the candidate value set associated with each value of the TDRA field are configured for the UE, thereby allowing a mismatch in acknowledgement of a candidate value between the base station and the UE to be avoided.

<Second Case>

In the second case, the UE may derive (determine), on the basis of each value m, the candidate value set associated with each value m of the TDRA field. The second case is described mainly about differences from the first case.

For example, in FIG. 1, each value m of the TDRA field may be equal to a specific candidate value (e.g., the first candidate value #1) in the candidate value set associated with each value m. The UE may derive another candidate value in this candidate value set on the basis of this specific candidate value. For example, the UE may derive such another candidate value by using the specific candidate value and given time offset (delta).

Note that deriving another candidate value in this candidate value set is not limited to deriving such another candidate value (SLIV) itself, and may be deriving a starting symbol S, a length L, and the like that are indicated by such another candidate value.

For example, in FIG. 1, candidate value #1 that indicates an index "0" and a length "8" of the starting symbol is associated with a value "00" of the TDRA field. The UE may derive indices "2," "4," and "6" of the starting symbols of SLIV candidate values #2 to #4 on the basis of the index "0" of the starting symbol and time offset (here, 2 symbols) that are indicated by the candidate value #1. The UE may also derive a length "8" indicated by SLIV candidate values #2 to #4 on the basis of a length "8" that is indicated by SLIV candidate values #1.

Similarly, the UE may derive at least one of an index and a length L of the starting symbol S of SLIV candidate value #2 or later candidate values on the basis of SLIV candidate value #1 that is associated with values "01" and "11" of the TDRA field.

Control of the PUSCH transmission based on the candidate value set that is determined as described above is similar to that of the case 1.

In the second case, all candidate values in the candidate value set associated with each value of the TDRA field do not need to be configured for the UE, thereby allowing overhead between the base station and the UE to be reduced as compared to that of the first case.

According to the first aspect above, the candidate value set is associated with a value m of the TDRA field in DCI, and thus it is possible to flexibly control the time domain resource allocated to the PUSCH.

(Second Aspect)

The second aspect describes a candidate value set that is associated with a given value (FDRA field value) of a given field (e.g., a frequency domain resource allocation (Frequency Domain Resource Assignment or allocation (FDRA)) field) in DCI.

The candidate value set may include one or more candidate values for information (FDRA information) related to frequency domain resource that is allocated to a PUSCH. The FDRA information may be, for example, a resource indication value (RIV), and the candidate value set may include one or more RIV candidates.

A UE may determine, on the basis of one RIV that is selected from the candidate value set associated with an FDRA field value in DCI, at least one of a starting value (also $RB_{START}$, and so on) and a transmission bandwidth (also referred to as a transmission bandwidth, a length of an allocated resource block, $L_{CRBs}$ ($L_{CRBs} \geq 1$), and so on) of the frequency domain resource allocated to the

PUSCH.

The UE may select one RIV from the above-described candidate value set on the basis of a given rule. The given rule may be, for example, selecting the RIV included in a frequency resource (or including the frequency resource) in which a measurement result, a channel state, and a channel quality are considered to be good, selecting the RIV included in a frequency resource (or including the frequency resource) in which a detection level is equal to or less than a given value as a result of a Listen-before-talk (LBT) and that is considered to be available, or the like.

The candidate value set associated with each value m (m = 0 to M-1) of the FDRA field may be configured for the UE by a base station (a first case), or may be derived on the basis of each value m (a second case). Note that the candidate value set may be predetermined by a specification.

Here, M may denote the number of values (e.g., 0 to M-1), (or code points) that can be taken by a value m of the FDRA field.

The number (size) of bits of the FDRA field may be expressed by Expression (2) below.

[Math. 2]

$$\lceil log_2(M) \rceil \qquad \text{(Expression 2)}$$

<First Case>

In the first case, the UE may receive the candidate value set associated with each value m of the FDRA field. Specifically, the UE may receive configuration information (also referred to as an FDRA list, a list, and so on) including M entries (M pieces) of the candidate value sets by higher layer signaling (e.g., RRC signaling).

Here, the number M of entries in the FDRA list may be equal to the number of values m of the FDRA field in DCI (in other words, 2 to the power of X when the FDRA field is X bits).

Each value m of the FDRA field in DCI may be associated with a certain (given) entry (in other words, the candidate value set) in the above-described FDRA list. For example, when values m of the FDRA field are equal to 0 to M-1, the values m may be associated with the (m+1)-th entry (in other words, the (m+1)-th candidate value set) in the above-described FDRA list.

The UE monitors a given search space, and detects DCI (e.g., DCI format 0_0 or 0_1) used for scheduling of a PUSCH. The UE may control transmission of the PUSCH on the basis of the candidate value set that is associated with a given value m of the FDRA field in the DCI.

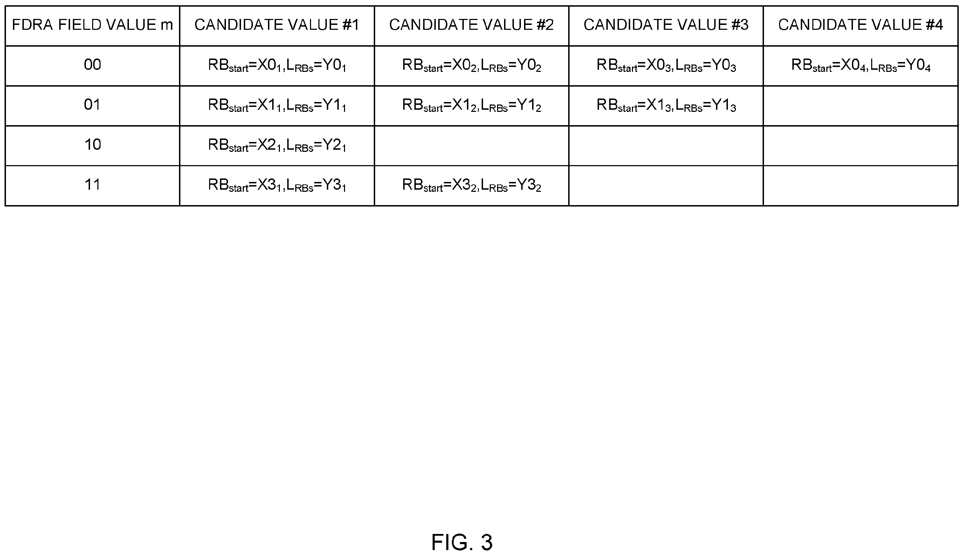

FIG. 3 is a diagram to show an example of the candidate value set that is associated with each value m of the FDRA field according to the first aspect. Although FIG. 3 shows an example in which the FDRA field is 2 bits, the present disclosure is not limited to this, and the FDRA field may be 3 or more bits.

As shown in FIG. 3, each value m of the FDRA field may be associated with a candidate set that includes a candidate value for one or more RIVs. Each RIV may indicate a starting position ($RB_{START}$) and a transmission bandwidth ($L_{CRBs}$) of a frequency time domain resource (e.g., a resource block) allocated to the PUSCH.

As shown in FIG. 3, as between a plurality of values m of the FDRA field, the numbers of candidate values included in the candidate value set may be different from or equal to each other. For example, in FIG. 3, the candidate value sets that are associated with each of values "00," "01," "10," and "11" of the FDRA field include a different number (4, 3, 1, and 2 pieces) of candidate values, respectively.

As described in FIG. 3, when the candidate value set for the RIV is associated with each value of the FDRA field, the UE may select one RIV from the candidate value set associated with a given value m of the FDRA field in the DCI, and may control transmission of the PUSCH on the basis of the selected RIV.

The base station may control a reception processing (e.g., at least one of reception, demodulation, and decoding) of the PUSCH by using each candidate value in the candidate value set that is associated with a given value m of the FDRA field in the DCI (in other words, the base station may detect the PUSCH in the candidate value set by using blind detection).

As shown in FIG. 3, in a plurality of RIVs in an identical candidate value set, it is only required that at least either starting positions ($RB_{START}$) or transmission bandwidths ($L_{CRBs}$) indicated by the plurality of the RIVs are different from each other.

For example, in a plurality of RIVs in an identical candidate value set, when starting positions ($RB_{START}$) indicated by the plurality of the RIVs are different from each other and transmission bandwidths ($L_{CRBs}$) indicated by the plurality of the RIVs are equal to each other, it is possible to equalize TBSs between the plurality of the RIVs. Therefore, even when the candidate value set including one or more RIVs is associated, in place of a single RIV, with an FDRA field value m in DCI, it is possible to simplify control of the PUSCH transmission.

For example, when transmission bandwidths ($L_{CRBs}$) between a plurality of RIVs in an identical candidate value set are different from each other, the UE may determine the TBS on the basis of an RIV that indicates a specific transmission bandwidth (e.g., a minimum transmission bandwidth).

Alternatively, when transmission bandwidths ($L_{CRBs}$) between a plurality of RIVs in an identical candidate value set are different from each other, the UE may determine the TBS on the basis of a transmission bandwidth indicated by an RIV that is selected from the candidate value set in accordance with a given rule.

In the first case, all candidate values in the candidate value set associated with each value of the FDRA field are configured for the UE, thereby allowing a mismatch in acknowledgement of a candidate value between the base station and the UE to be avoided.

<Second Case>

In the second case, the UE may derive, on the basis of each value m, the candidate value set associated with each value m of the FDRA field. The second case is described mainly about differences from the first case.

For example, in FIG. 3, each value m of the FDRA field may be equal to a specific candidate value (e.g., the first candidate value #1) in the candidate value set associated with each value m. The UE may derive another candidate value in this candidate value set on the basis of this specific candidate value. For example, the UE may derive such another candidate value by using the specific candidate value and given frequency offset (delta).

Note that deriving another candidate value (RIV) in this candidate value set is not limited to deriving such another candidate value itself, and may be deriving a starting position ($RB_{START}$), a transmission bandwidth ($L_{CRBs}$), and the like that are indicated by such another candidate value.

Control of the PUSCH transmission based on the candidate value set that is determined as described above is similar to that of the case 1.

In the second case, all candidate values in the candidate value set associated with each value of the FDRA field do not need to be configured for the UE, thereby allowing overhead between the base station and the UE to be reduced as compared to that of the first case.

According to the second aspect above, the candidate value set that is associated with a value m of the FDRA field in DCI, and thus it is possible to flexibly control the frequency domain resource allocated to the PUSCH.

(Other Aspects)

Although the first and second aspects describe the candidate value set that is associated with a value of the TDRA field or the FDRA field in DCI, the present disclosure is not limited to this. With respect to any field in DCI, it is possible to associate the candidate value set with each value of the field by using the methods mentioned in the cases 1 and 2 of the above-described first and second aspects.

For example, the field may be a field related to at least one of a redundancy version, a transmission power control (TPC) command, a sounding reference signal (SRS), spatial domain resource allocation (Space Domain Resource Assignment or Allocation (SDRA)), and a demodulation reference signal (DMRS).

For example, the field related to the SDRA may be a field related to at least one of precoder information, the number of layers, the number of antenna ports, an SRS resource that has a quasi co-location relationship with a DMRS of a PUSCH, and a phase-tracking reference signal (PTRS).

The field related to the DMRS may also be a field related to initialization of a DMRS sequence. The field related to the SRS may also be information related to a request (trigger) for the

SRS.

The candidate value set associated with each value of the above-described field in DCI may be determined using the above-described case 1 or 2. For example, when deriving the candidate value set associated with each value of an RV field by using the above-described case 2, the UE may determine, on the basis of a value m "0" of the RV field, candidate values #1, #2, #3, and #4 in the candidate value set associated with the value m as "0," "2," "3," and "1," respectively.

Although description is given about DCI (e.g., DCI format 0_0 or 0_1) used for scheduling of a PUSCH in the above description, the present disclosure can be employed in DCI (e.g., DCI format 1_0, 1_1) used for scheduling of a PDSCH. The present disclosure can be employed by replacing the above-described PUSCH and transmission with a PDSCH and reception, respectively.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

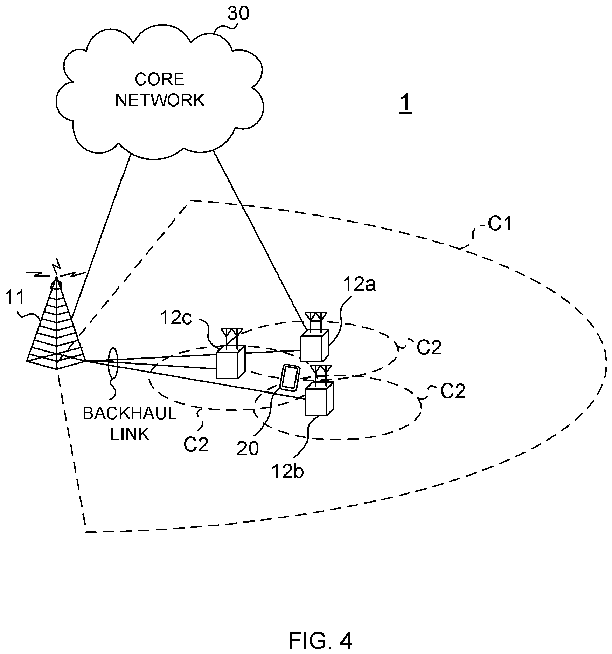

FIG. 4 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

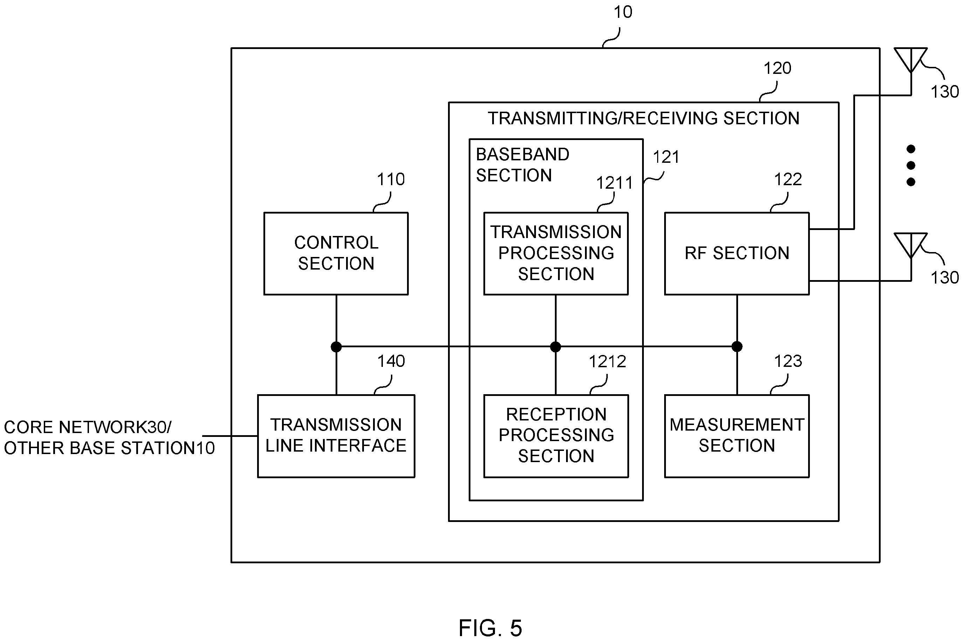

FIG. 5 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 transmits downlink control information including a given value of a given field. The transmitting/receiving section 120 may receive an uplink signal (e.g., an uplink shared channel), and may transmit a downlink signal (e.g., a downlink shared channel).

The control section 110 may detect, on the basis of a set of one or more candidate values associated with the given value in the downlink control information, an uplink shared channel by using blind detection.

The transmitting/receiving section 120 may transmit, by higher layer signaling, a set of one or more candidate values associated with each value of the given field (the first case).

The control section 110 may determine a specific candidate value in the set on the basis of the given value, and may derive another candidate value in the set on the basis of the specific candidate value (the second case).

The given field in the downlink control information may a field related to at least one of time domain resource allocation, frequency domain resource allocation, a redundancy version, a transmission power control command, a sounding reference signal (SRS), spatial domain resource allocation, and a demodulation reference signal.

The control section 210 may control, on a given carrier (e.g., a carrier on which listening is performed before transmission), reception of an uplink signal (e.g., an uplink shared channel) or transmission of a downlink signal (e.g., a downlink shared channel).

(User Terminal)

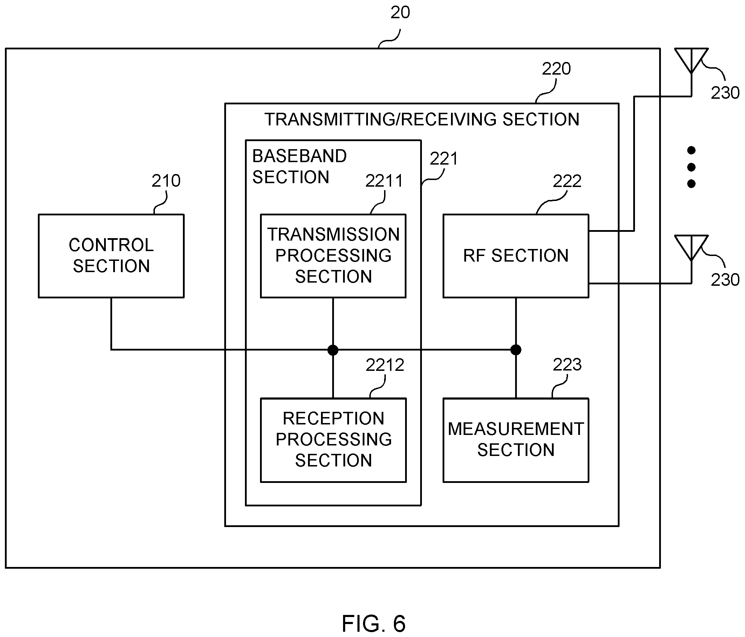

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

Note that the transmitting/receiving section 220 receives downlink control information including a given value of a given field. The transmitting/receiving section 220 may receive an uplink signal (e.g., an uplink shared channel), and may transmit a downlink signal (e.g., a downlink shared channel).

The control section 210 may control, on the basis of one value selected from a set of one or more candidate values associated with the given value, transmission of an uplink shared channel or reception of a downlink shared channel that are scheduled by the downlink control information.

The transmitting/receiving section 220 may receive, by higher layer signaling, a set of one or more candidate values associated with each value of the given field (the first case).

The control section 210 may determine a specific candidate value in the set on the basis of the given value, and may derive another candidate value in the set on the basis of the specific candidate value (the second case).

The given field in the downlink control information may a field related to at least one of time domain resource allocation, frequency domain resource allocation, a redundancy version, a transmission power control command, a sounding reference signal (SRS), spatial domain resource allocation, and a demodulation reference signal.

The control section 210 may control, on a given carrier (e.g., a carrier on which listening is performed before transmission), transmission of an uplink signal (e.g., an uplink shared channel) or reception of a downlink signal (e.g., a downlink shared channel).

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

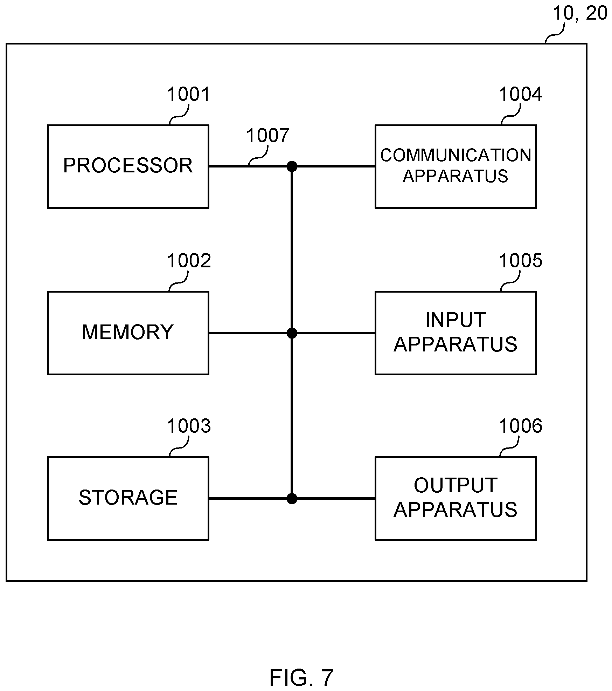

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used.

For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A user terminal comprising:

   a receiving section that receives downlink control information including a given value of a given field; and
   a control section that controls, on the basis of one value selected from a set of one or more candidate values associated with the given value, transmission of an uplink shared channel or reception of a downlink shared channel that are scheduled by the downlink control information.

2. The user terminal according to claim 1, wherein
   the receiving section receives, by higher layer signaling, a set of one or more candidate values associated with each value of the given field.

3. The user terminal according to claim 1, wherein
   the control section determines a specific candidate value in the set on the basis of the given value, and derives another candidate value in the set on the basis of the specific candidate value.

4. The user terminal according to any one of claims 1 to 3, wherein
   the given field is a field related to at least one of time domain resource allocation, frequency domain resource allocation, a redundancy version, a transmission power control command, a sounding reference signal (SRS), spatial domain resource allocation, and a demodulation reference signal.

5. The user terminal according to any one of claims 1 to 4, wherein
   the control section controls, on a carrier on which listening is performed before transmission, transmission of the uplink shared channel or reception of the downlink shared channel.

6. A radio communication method for a user terminal comprising:

   receiving downlink control information including a given value of a given field; and
   controlling, on the basis of one value selected from a set of one or more candidate values associated with the given value, transmission of an uplink shared channel or reception of a downlink shared channel that are scheduled by the downlink control information.

| TDRA FIELD VALUE m | CANDIDATE VALUE #1 | CANDIDATE VALUE #2 | CANDIDATE VALUE #3 | CANDIDATE VALUE #4 |
|---|---|---|---|---|
| 00 | S=0,L=8 | S=2,L=8 | S=4,L=8 | S=6,L=8 |
| 01 | S=0,L=4 | S=4,L=4 | S=8,L=4 | |
| 10 | S=0,L=14 | | | |
| 11 | S=0,L=7 | S=7,L=7 | | |

FIG. 1

EP 3 952 514 A1

FIG. 2A

FIG. 2B

FIG. 2C

FIG. 2D

| FDRA FIELD VALUE m | CANDIDATE VALUE #1 | CANDIDATE VALUE #2 | CANDIDATE VALUE #3 | CANDIDATE VALUE #4 |
|---|---|---|---|---|
| 00 | $RB_{start}=X0_1, L_{RBs}=Y0_1$ | $RB_{start}=X0_2, L_{RBs}=Y0_2$ | $RB_{start}=X0_3, L_{RBs}=Y0_3$ | $RB_{start}=X0_4, L_{RBs}=Y0_4$ |
| 01 | $RB_{start}=X1_1, L_{RBs}=Y1_1$ | $RB_{start}=X1_2, L_{RBs}=Y1_2$ | $RB_{start}=X1_3, L_{RBs}=Y1_3$ | |
| 10 | $RB_{start}=X2_1, L_{RBs}=Y2_1$ | | | |
| 11 | $RB_{start}=X3_1, L_{RBs}=Y3_1$ | $RB_{start}=X3_2, L_{RBs}=Y3_2$ | | |

FIG. 3

EP 3 952 514 A1

30

CORE
NETWORK

1

C1

11

12a

12c

C2

BACKHAUL
LINK

C2

C2

20

12b

FIG. 4

FIG. 5

EP 3 952 514 A1

FIG. 6

EP 3 952 514 A1

10, 20

```
                                        1001                           1004
                                                  1007
                   ┌─────────────────┐          ┌──────────────────────┐
                   │                 │          │                      │
                   │   PROCESSOR     │──────●───│   COMMUNICATION      │
                   │                 │      │   │    APPARATUS         │
                   └─────────────────┘      │   └──────────────────────┘
                                            │
                                        1002│                          1005
                                            │
                   ┌─────────────────┐      │   ┌──────────────────────┐
                   │                 │      │   │                      │
                   │    MEMORY       │──────●───│      INPUT           │
                   │                 │      │   │    APPARATUS         │
                   └─────────────────┘      │   └──────────────────────┘
                                            │
                                        1003│                          1006
                                            │
                   ┌─────────────────┐      │   ┌──────────────────────┐
                   │                 │      │   │                      │
                   │    STORAGE      │──────●───│     OUTPUT           │
                   │                 │          │    APPARATUS         │
                   └─────────────────┘          └──────────────────────┘
```

FIG. 7

# INTERNATIONAL SEARCH REPORT

| | International application No. |
|---|---|
| | PCT/JP2019/014448 |

**A. CLASSIFICATION OF SUBJECT MATTER**
Int. Cl. H04W72/04(2009.01)i, H04W16/14(2009.01)i, H04W28/06(2009.01)i

According to International Patent Classification (IPC) or to both national classification and IPC

**B. FIELDS SEARCHED**

Minimum documentation searched (classification system followed by classification symbols)
Int. Cl. H04W72/04, H04W16/14, H04W28/06

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 2018-0134305 A (LG ELECTRONICS INC.) 18 December 2018, paragraphs [0099]-[0178] & WO 2018/226054 A1 | 1-2, 4, 6<br>3, 5 |
| Y | JP 2018-523410 A (HUAWEI TECHNOLOGIES CO., LTD.) 16 August 2018, paragraphs [0100]-[0104], fig. 5 & US 2018/0160410 A1, paragraphs [0111]-[0115], fig. 5 & EP 3322239 A1 & CN 106664689 A & KR 10-2018-0031723 A | 3 |
| Y | NTT DOCOMO, INC., UL signals, channels for NR-U, 3GPP TSG RAN WG1 #96bis R1-1904948, 30 March 2019, section 5 | 5 |

☐  Further documents are listed in the continuation of Box C.         ☐  See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 23.05.2019 | 04.06.2019 |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010